# EUROPEAN PATENT APPLICATION

(11) **EP 2 797 331 A1**
(43) Date of publication of application: **29.10.2014**
(21) Application number: 13198384.3
(22) Date of filing: 19.12.2013
(51) Int. Cl.: H04N 21/442, H04N 21/482

(54) **Display apparatus for providing recommendation information and method thereof**

(30) Priority: 25.04.2013 KR 20130045948
(71) Applicant: Samsung Electronics Co., Ltd, Gyeonggi-do 443-742 (KR)
(72) Inventor: Choi, Won-yong, Seoul (KR); Kim, Byoung-joo, Gyeonggi-do (KR); Jung, Jong-pil, Gyeonggi-do (KR); Kim, Gae-youn, Gyeonggi-do (KR); Song, Ho-keun, Gyeonggi-do (KR)
(74) Representative: Jones, Ithel Rhys

(57) **Abstract**

A display apparatus includes display unit; a processing unit configured to extract an object included in the input image and generate object information based on the extracted object; a communication unit configured to communicate with an external server via a network; and a controller configured to control the communication unit to transmit the object information to the server receive recommendation information generated by an analysis of the object information from the server.

## Description

### BACKGROUND

### 1. Field of the Invention

Apparatuses and methods consistent with exemplary embodiments relate to display apparatuses for providing recommendation information and methods thereof.

### 2. Description of the Related Art

Recently, in response to users' demands for an electronic product with multiple functions, electronic products capable of performing not only fundamental functions but also other additional functions have been introduced. For example, a television (TV), a smart phone, and a tablet personal computer (PC) may execute a variety of applications and be connected to the Internet to receive and reproduce multimedia content through the Internet, in addition to basic functions such as image display and call functions.

As a wide range of applications and contents may be used in such electronic products, it requires a considerable amount of time for a user to search for an interesting application and content and also it is difficult to obtain a desired result.

For this reason, related art electronic products have a function of recommending content to a user. However, a related art recommendation function is achieved based on user information input in advance by the user. Thus, the user needs to set certain type of information desired by the user with respect to the recommendation function. When the user's preference is changed, the user needs to change recommendation function setting, which is inconvenient. Accordingly, a related art recommendation service is limited to information input in advance.

### SUMMARY

One or more exemplary embodiments provide a display apparatus capable of recognizing a surrounding environment around the display apparatus to detect user's preference and providing recommendation information according thereto, without requiring a user to input user information in advance, and a method of providing recommendation information using the display apparatus.

One or more exemplary embodiments also provide a display apparatus capable of extracting object information including an object in an input image to detect user's preference and providing recommendation information based on the extracted object information and a method of providing recommendation information using the display apparatus.

According to an aspect of an exemplary embodiment, provided is a display apparatus including: a display unit; a processing unit configured to receive an input image, extract an object included in the input image, and to generate object information based on the extracted object; a communication unit configured to communicate with an external server via a network; and a controller configured to control the communication unit to transmit the object information to the server and receive recommendation information generated by an analysis of the object information from the server.

The recommendation information may include information about a recommended content and a recommended application.

The controller may display, on the display unit, a list of the recommended content and the recommended application included in the recommendation information, on the display unit.

The controller may automatically install the application included in the recommendation information.

The recommendation information may include setting information of the display apparatus, and the controller may change a setting of the display apparatus based on the setting information.

The setting information of the display apparatus may include information about at least one from among a wallpaper, an icon, and a display configuration.

The object information may include keyword information corresponding to the object information and the server generates the recommendation information by information retrieval based on the keyword information through an Internet network.

The server may analyze a color of the object information to generate the recommendation information.

The server may generate the recommendation information based on at least one from among the object information and user information input in advance.

The display apparatus may further include an image capturing unit configured to capture an image, wherein the captured image is provided to the processing unit as the input image.

The image capturing unit may capture an image of a surrounding environment of the display apparatus.

The controller may control the image capturing unit to capture the image of the surrounding environment upon detection that the display apparatus is turned on.

The controller may control the image capturing unit to capture the image of the surrounding environment in a predetermined period of time.

The display apparatus may be a smart phone.

According to an aspect of another exemplary embodiment, provided is a method of providing recommendation information using a display apparatus, the method including: receiving an input image; extracting an object included in the input image and generating object information based on the extracted object; transmitting the object information to an external server though a network; and receiving recommendation information generated by an analysis of the object information from the server.

The recommendation information may include information about a recommended content and a recommended application.

The performing may include displaying a list of the recommended content and the recommended application included in the recommendation information.

The method may further include automatically installing the recommended application included in the recommendation information.

The recommendation information may include setting information of the display apparatus, and the method may further include changing a setting of the display apparatus based on the setting information.

The setting information of the display apparatus may include information about at least one from among a wallpaper, an icon, and a display configuration.

The object information may include keyword information corresponding to the object information and the server may generate the recommendation information by information retrieval based on the keyword information through an Internet network.

The server may analyze a color of the object information to generate the recommendation information.

The server may generate the recommendation information based on at least one from among the object information and user information input in advance.

The method may further include capturing an image, wherein the captured image is provided as the input image

The captured image may be an image of a surrounding environment of the display apparatus.

The capturing may include capturing the image of the surrounding environment upon detection that the display apparatus is turned on.

The capturing may include capturing the image of the surrounding environment in a predetermined period of time.

According to an aspect of still another exemplary embodiment, provided is a non-transitory computer readable recording medium having embodied thereon at least one program including a command for performing a method of providing recommendation information using a display apparatus, the method including: receiving an input image; extracting an object included in the input image and generating object information based on the extracted object; transmitting the object information to an external server though a network; and receiving recommendation information generated by an analysis of the object information from the server.

According to an aspect of still another exemplary embodiment, provided is a server including: a communication unit configured to communicate with a display apparatus; and a controller configured to receive, from the display apparatus, object information about an object included in a predetermined input image of the display apparatus, determine recommendation information corresponding to the object information, and transmit the recommendation information to the display apparatus.

According to an aspect of still another exemplary embodiment, provided is a method of controlling a server, the method including: receiving, from a display apparatus, object information about an object included in a predetermined input image of the display apparatus; determining recommendation information corresponding to the object information; and transmitting the recommendation information to the display apparatus.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a schematic view illustrating a surrounding environment captured by a display apparatus according to an exemplary embodiment;
FIG. 2 is a block diagram illustrating a display apparatus according to an exemplary embodiment;
FIG. 3 is a view for explaining extraction of object information according to an exemplary embodiment;
FIG. 4 is a view for explaining extraction of keyword information from object information according to an exemplary embodiment;
FIGS. 5 and 6 are views for explaining a control operation using recommendation information according to an exemplary embodiment;
FIG. 7 is a flowchart illustrating a method of providing recommendation information according to an exemplary embodiment;
FIG. 8 is a flowchart illustrating a method of providing recommended information generated by an external server to the display apparatus;
FIG. 9 is a block diagram illustrating a display apparatus according to another exemplary embodiment;
FIG. 10 is a flowchart illustrating a method of providing recommendation information according to another exemplary embodiment; and
FIG. 11 is a timing view for explaining a process of providing recommendation information according to an exemplary embodiment.

### DETAILED DESCRIPTION

Certain exemplary embodiments are described in greater detail below with reference to the accompanying drawings.

In the following description, the same drawing reference numerals are used for the same elements even in different drawings. The matters defined in the description, such as detailed construction and elements, are provided to assist in a comprehensive understanding of exemplary embodiments. Thus, it is apparent that exemplary embodiments can be carried out without those specifically defined matters. Also, well-known functions or constructions are not described in detail since they would obscure exemplary embodiments with unnecessary detail.

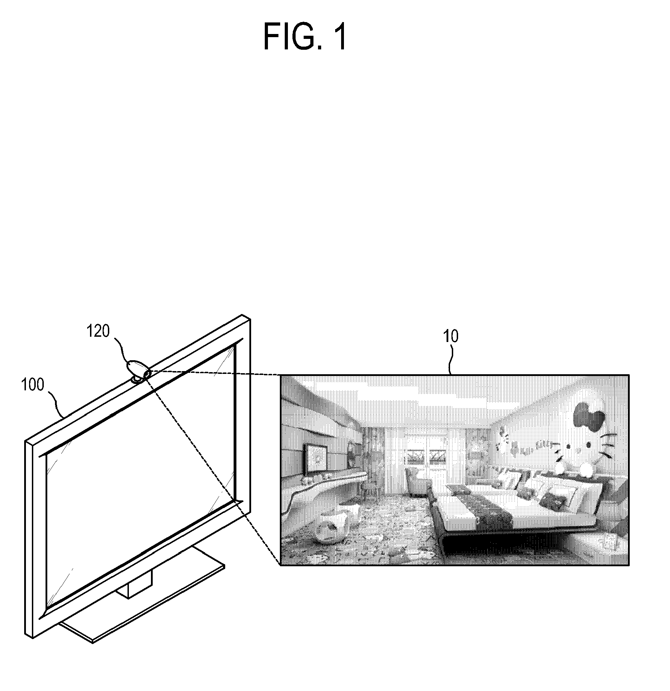

FIG. 1 is a schematic view illustrating a surrounding environment captured by a display apparatus 100 according to an exemplary embodiment.

The display apparatus 100 according to an exemplary embodiment is a device that displays a content, received from an external source, on a display panel and may be, for example, a television (TV), a laptop computer, a smart phone, a tablet personal computer (PC), or a personal digital assistant (PDA), without being limited thereto. The display apparatus 100 has a wire-based or wireless communication function to receive the content from the external source through a network and to receive, install, and execute an application. Here, the content refers to any kind of information which may be displayed, reproduced, or provided on the display apparatus 100, for example, a broadcast signal, a text, a video, a picture, a movie and music. The application refers to a general application program capable of performing functions such as, for example, a content reproducing and editing function, functions of a game player, a global positioning system (GPS), an electronic dictionary, and a social networking service (SNS). The display apparatus 100 may include an operating system such as, for example, Windows, Linux, Android, and Bada to execute the application.

The display apparatus 100 may capture (e.g., photograph) an image 10 including a surrounding environment of the display apparatus 100. As shown in FIG. 1, when the display apparatus 100 is configured as a TV, a camera 120 installed at, for example, one side of the TV may photograph an image of the surrounding environment of a room in which the TV is installed. The photographed image 10 may include an object such as, for example, a window, a chair, and a bed. The display apparatus 100 may receive recommendation information corresponding to the object via an analysis of the image.

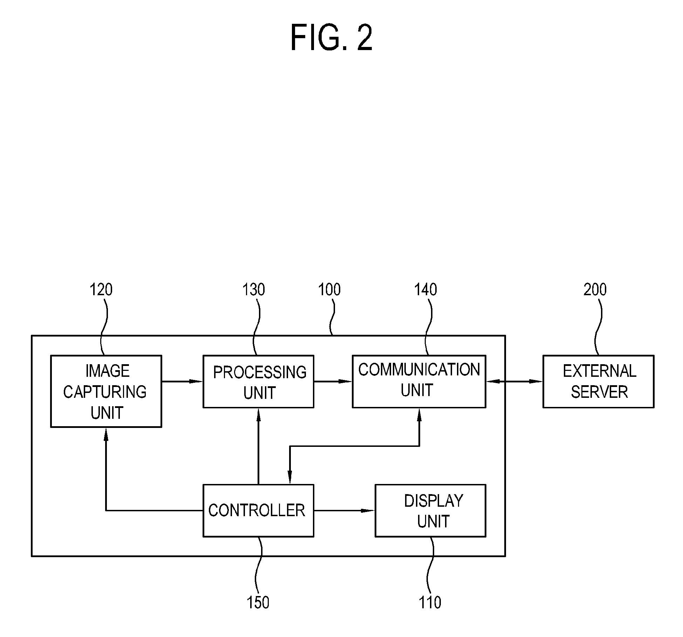

A process of photographing the image, analyzing the image, and providing the recommendation information will be described in detail with reference to FIGS. 2 to 7.

FIG. 2 is a block diagram illustrating the display apparatus 100 according to an exemplary embodiment.

As shown in FIG. 2, the display apparatus 100 includes a display unit 110, an image capturing unit 120, a processing unit 130, a communication unit 140, and a controller 150.

The display unit 110 displays an image. The display unit 110 may include a display panel (not shown) to display an image such as, for example, a liquid crystal display (LCD), a plasma display panel (PDP), and an organic light emitting diode (OLED), and a panel driver (not shown) to conduct a timing control so that an image signal is displayed on the display panel. The image displayed on the display unit 110 may include images obtained by processing terrestrial, cable, and satellite broadcast signals received by the display apparatus 100, videos generated by an application executed by the controller 150, and graphics for user interfaces.

The image capturing unit 120 photographs an image. The image capturing unit 120 photographs an image including a surrounding environment to generate image data and outputs the image data to the processing unit 130. The image capturing unit 120 may be configured as any general camera capable of photographing an image. The image capturing unit 120 may be disposed at one external side of the display apparatus 100, as shown in FIG. 1, or provided separately from the display apparatus 100. When the image capturing unit 120 is provided separately from the display apparatus 100, the image capturing unit 120 may have a wire-based or wireless communication function to transmit the photographed image to the display apparatus 100.

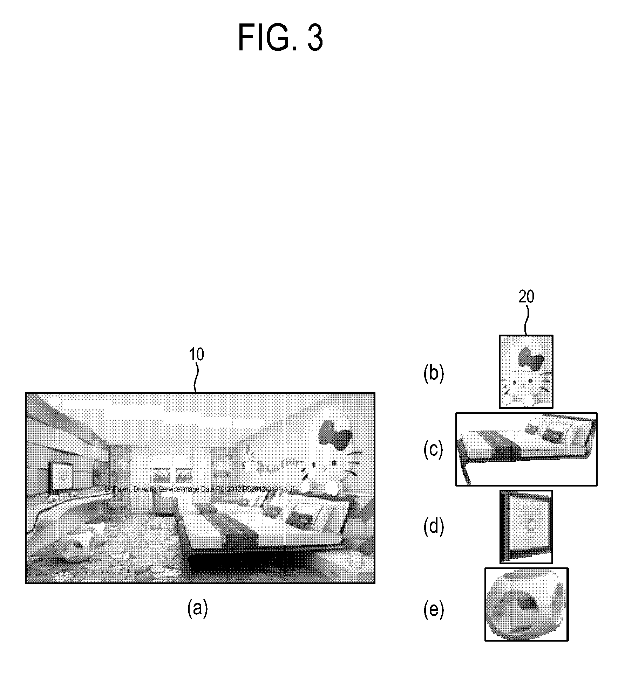

The processing unit 130 extracts an object included in the photographed image to generate object information. The object information may be an image including the extracted object only. In FIG. 1, the photographed image 10 includes objects such as a window, a chair, a bed and a wallpaper with a hello kitty character, each of which may be recognized as an object. The processing unit 130 may recognize each object included in the photographed image 10 through various known object recognition algorithms. As shown in FIG. 3, a window (d), a chair (e), a bed (c) and a hello kitty character (b) included in the photographed image (a) may be recognized as objects, respectively, and the processing unit 130 may generate an object image 20 including only an image of each object.

The communication unit 140 is configured to communicate with an external server 200 through a network. The communication unit 140 is provided as a wire-based or wireless communication module for connection to the network, transmits object information 20 generated by the processing unit 130 to the external server 200 according to control of the controller 150, and receives recommendation information from the external server 200. Further, the communication unit 140 may transmit user information input by a user to the external server 200. The user information includes information about a user such as a gender, an age and hobbies of the user, which may be input in advance and used in generating the recommendation information.

The external server 200 analyzes the object information 20 received from the display apparatus 100 to generate the recommendation information and transmits the recommendation information to the display apparatus 100. The external server 200 may be connected to a plurality of display apparatuses 100 and provide different kinds of contents and applications to each display apparatus 100 in addition to the recommendation information.

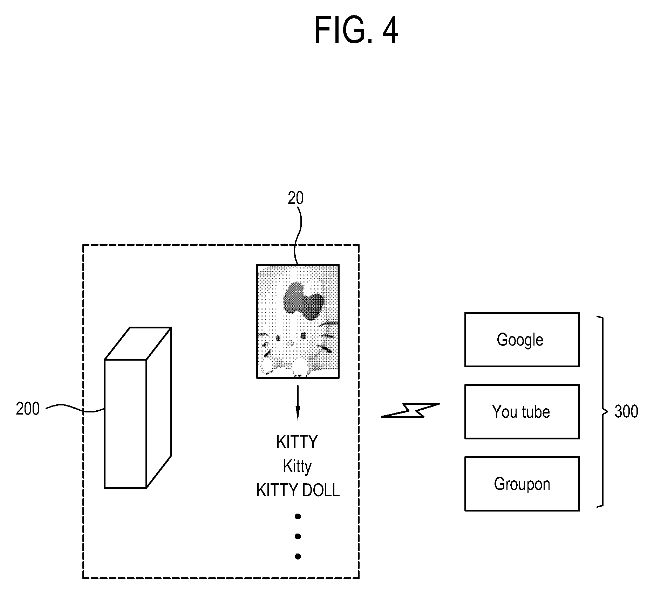

When the object information 20 is received from the display apparatus 100, the external server 200 may generate keyword information 30 corresponding to the object information 20 through a known image search algorithm. For example, as shown in FIG. 4, the external server 200 may obtain the keyword information 30 such as, for example, a text "kitty," "KITTY," "hello kitty character," and "kitty doll," through the object image 20 from which a portion of the wallpaper with the hello kitty character is extracted.

When the keyword information 30 is generated, the external server 200 may retrieve information corresponding to a keyword by connecting to Internet sites 300 including, for example, a portal site such as Google, a content-sharing site such as YouTube, and a shopping site such as Groupon, through an Internet network. For example, a video content including the hello kitty character, product information about a kitty doll, and a wallpaper widget including the hello kitty character may be retrieved. The external server 200 may generate the recommendation information by combining the retrieved information. Further, considering that small aged girls, e.g., preschool aged girls tend to like a hello kitty character, the external server 200 may generate recommendation information including content and an application that small aged girls are expected to like.

Also, the external server 200 may analyze a color of the received object image 20 to generate recommendation information. For example, if the object image 20 has a wide pink-colored area, the external server 200 may generate information about content and an application that small aged girls having preference for a pink color are expected to like.

In addition, the external server 200 may generate recommendation information based on at least one from among the object information 20 and user information input in advance to the display apparatus 100. The user information may be information about the user, such as a gender, an age and hobbies of the user. The external server 200 may generate the recommendation information to include information about content and an application that the user corresponding to the age, the gender, and the hobbies, included in the object information 20 and used for generating the recommendation information, is expected to like.

In an exemplary embodiment, a process of analyzing the object information 20 and a process of generating the keyword information 30 and the recommendation information may involve a great amount of information. Therefore, the external server 200 to which the plurality of display apparatuses 100 is connected may perform the above described processes. Alternatively, by using hardware and/or software configuration of the display apparatus 100, the above processes may be performed.

The controller 150 may be configured as a processor responsible for generic control over the display apparatus 100. For example, the controller 150 may be a central processing unit (CPU). The controller 150 may manage the hardware and/or software configuration of the display apparatus 100 through an operating system, such as Windows, Linux, Android and Bada, and execute an installed application program to perform a predetermined operation.

The controller 150 may control a process for receiving recommendation information, i.e., photographing an image by the image capturing unit 120, a process for generating the object image 20 by the processing unit 130, and a process for transmitting the object information 20 through the communication unit 140. Also, the controller 150 may conduct a preset control operation based on received recommendation information. Here, the control operation conducted by the controller 150 may include displaying a user interface (UI) including the recommendation information, reproducing content, installing an application, and setting a display configuration.

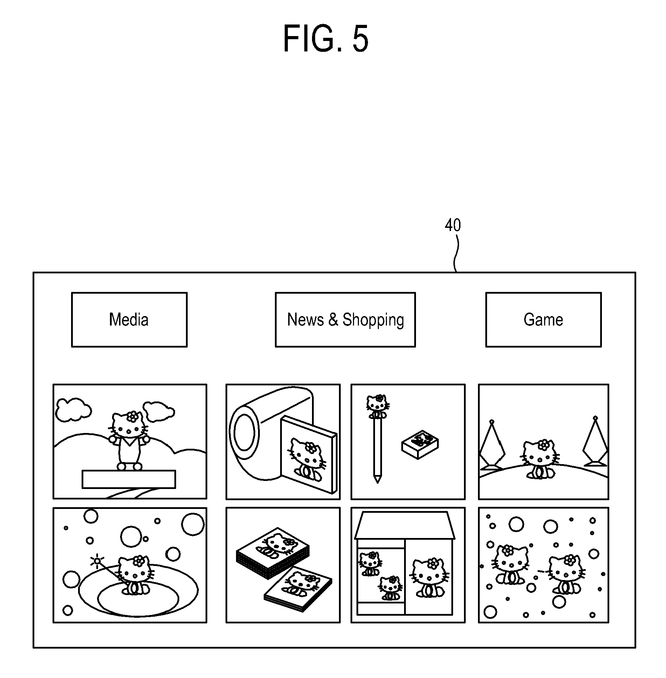

According to an exemplary embodiment, the recommendation information received from the external server 200 may include information about recommended content and applications, and the controller 150 may display a list of content and an application included in the recommendation information on the display unit 110. As shown in FIG. 5, a list 40 of information such as a media, news and shopping, and a game relevant to the hello kitty character may be displayed. The displayed list 40 is provided to allow the user to select at least one content or application in the list, and provided content or applications may be downloaded, played back, or installed. Further, the controller 150 may automatically install an application included in the recommendation information without requiring separate user's setting.

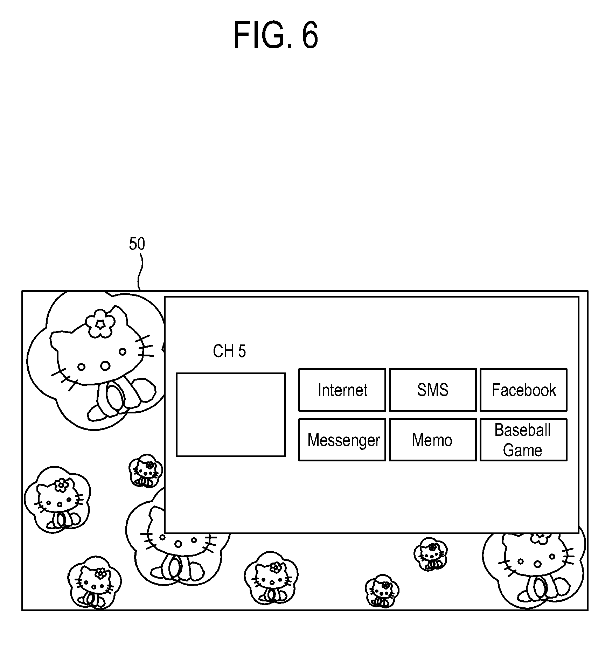

Alternatively, the recommendation information received from the external server 200 may include setting information of the display apparatus 100, and the controller 150 may change a setting of the display apparatus 100 based on the setting information. Here, the setting information of the display apparatus 100 may include information about a wallpaper of a desktop, an icon, or a display configuration. For example, as shown in FIG. 6, a wallpaper 50 including the hello kitty character may be applied to a screen. Further, considering that the user may be a small aged girl, each icon may be changed into a form that small aged girls are expected to like. The display setting information may include information about color temperature, brightness and contrast information. Statically, as small aged girls tend to like reddish color, color temperature of a displayed image may be adjusted to a higher value.

Photographing an image by the image capturing unit 120, generating the object information by the processing unit 130 and receiving recommendation information through the communication unit 140 may be carried out when the display apparatus 100 is turned on. That is, when the display apparatus 100 is turned on, recommendation information including recommended content and applications based on a surrounding environment of the user may be provided. When the display apparatus 100 is configured as a portable device, such as a laptop computer and a smart phone, the surrounding environment of the user varies according to a location of the user, and thus recommendation information corresponding to the surrounding environment of the user may be provided. Alternatively, instead of providing the recommendation information when the display apparatus 100 is turned on, each of the above operations may be carried out when the user requests the recommendation information. Also, each operation may be carried out automatically in every predetermined period of time.

As described above, the display apparatus 100 recognizes a surrounding environment and objects around the display apparatus 100 to detect user's preference without requiring the user to input user information in advance and provides recommendation information according to the detected user's preference. Thus, the user may obtain desired information in a convenient and easier way. Also, the user may spend reduced time for obtaining the desirable information.

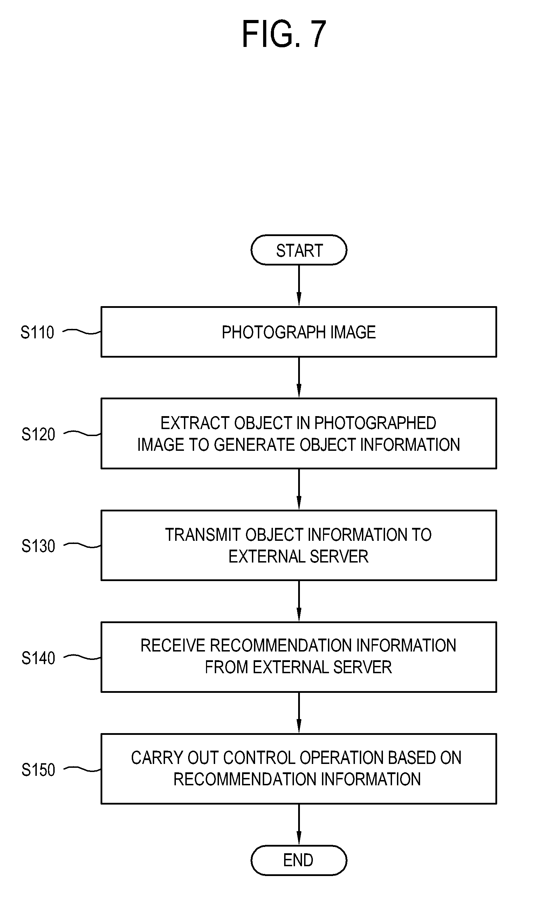

FIG. 7 is a flowchart illustrating a process of providing recommendation information using a display apparatus according to an exemplary embodiment.

The display apparatus 100 is a device that displays content, received from an external source, on a display panel and may be a TV, a laptop computer, a smart phone, a tablet PC, or a PDA. The display apparatus 100 has a wire-based or wireless communication function to receive content from the external source through a network and to receive, install, and execute an application.

The display apparatus 100 photographs an image including the surrounding environment of the display apparatus 100 (S110). To this end, the display apparatus 100 includes a camera installed at one side of the display apparatus 100. Alternatively, a camera separate from the display apparatus 100 may transmit an image to the display apparatus 100 through wire-based or wireless communications.

The display apparatus 100 extracts an object included in the photographed image to generate object information (S120). As described above with reference to FIG. 3, each item included in the photographed image is recognized as the object, and the object information is generated to include an image of each object only.

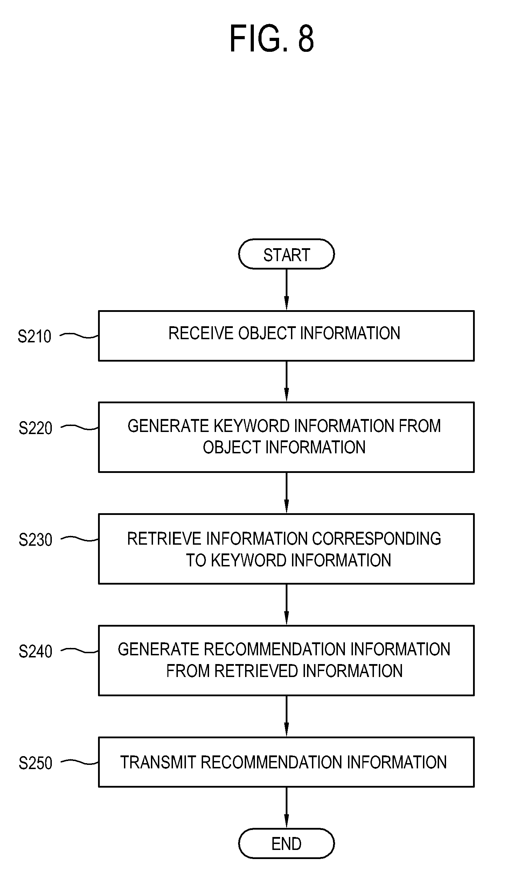

The display apparatus 100 transmits the generated object information to the external server 200 (S130). The display apparatus 100 may include a wire-based or wireless communication module to connect to a network for communications with the external server 200. A process of generating recommendation information by the external server 200 based on the received object information will be described later with reference to FIG. 8.

The display apparatus 100 receives recommendation information generated by the external server 200 (S140). Here, the recommendation information may include information about recommended content and applications or setting information of the display apparatus 100.

The display apparatus 100 carries out a preset control operation based on the received recommendation information (S150). In one exemplary embodiment, the recommendation information may include information about the recommended content and applications, and the display apparatus 100 may display a list of the content and the applications included in the recommendation information, as shown in FIG. 5. Moreover, the display apparatus 100 may automatically install the applications included in the recommendation information without requiring separate user's setting.

Alternatively, the recommendation information may include the setting information of the display apparatus 100, and a setting of the display apparatus 100 may be changed based on the setting information. Here, the setting information of the display apparatus 100 may include information about a wallpaper of a desktop, an icon, or a display configuration. As shown in FIG. 6, at least one from among the wallpaper, the icon, and the display configuration may be adjusted according to the recommendation information.

FIG. 8 is a flowchart illustrating a method of providing recommended information generated by the external server 200 to the display apparatus 100.

The external server 200 may be connected to a plurality of display apparatuses 100 and provide various kinds of contents and applications to each display apparatus 100 in addition to the recommendation information.

The external server 200 receives object information from the display apparatus 100 (S210). The object information refers to information generated as described above in detail with reference to FIG. 3.

When the object information is received, the external server 200 generates keyword information from the object information (S220). Here, the external server 200 may generate keyword information corresponding to individual object information through a known image search algorithm. When the keyword information is generated, the external server 200 may retrieve information corresponding to the keyword information (S230). For example, the external server 200 may retrieve information using a keyword included in the keyword information by connecting to, for example, a portal site, a content-sharing site, or a shopping site through the Internet network, similar to a manner described above with reference to FIG. 4.

The external server 200 generates recommendation information from the retrieved information (S240) and transmits the generated recommendation information to the display apparatus 100 (S250).

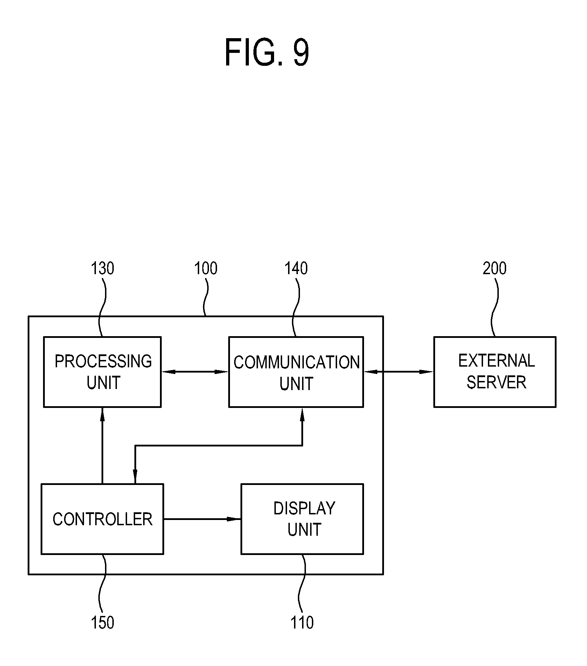

FIG. 9 is a block diagram illustrating a display apparatus according to another exemplary embodiment. Referring to FIG. 9, a display apparatus 100 according to another exemplary embodiment includes the display unit 110, the processing unit 130, the communication unit 140, and the controller 150. The display unit 110, the processing unit 130, the communication unit 140, and the controller 150 have substantially the same configuration as those of the exemplary embodiment of FIG. 2, and therefore, a detailed explanation thereof is omitted.

As shown in FIG. 9, the display apparatus 100 may not include the image capturing unit 120. In this case, the display apparatus 100 may receive a predetermined input image from the external server 200 through a network. The processing unit 130 may extract object information including an object included in the received predetermined input image and generate keyword information based on the extracted object information. The keyword information may be transmitted to the external server 200 through the communication unit 140. The external server 200 may provide the recommendation information corresponding to the keyword information.

In an exemplary embodiment, the predetermined image may be transmitted from another user terminal to the display apparatus 100 through the external server 200. Alternatively, the predetermined image may be directly transmitted to the display apparatus 100 from another user terminal communicatively coupled to the display apparatus 100. Also, the predetermined image may be an image downloaded from the external server 200 automatically or according to a user's choice. For example, the predetermined image may be automatically downloaded when the user executes a predetermined application. Thus, according to exemplary embodiments, object information may be extracted from images obtained in various ways and used to provide the recommendation information.

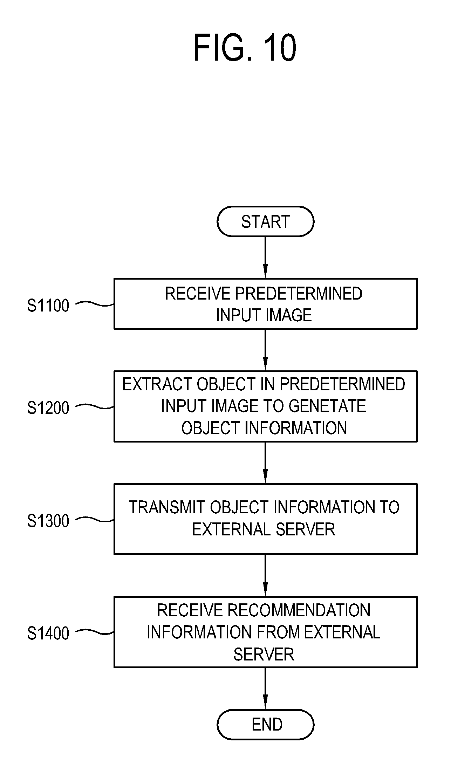

FIG. 10 is a flowchart illustrating a method of providing recommendation information according to another exemplary embodiment.

Referring to FIG. 10, the display apparatus 100 receives a predetermined input image (S1100). The predetermined input image may be an image captured by the display apparatus 100 or an image received from an external source. For example, the predetermined input image may be transmitted from another user terminal or downloaded from the external server 200. The display apparatus 100 extracts an object included in a predetermined input image to generate object information (S1200). The display apparatus 100 transmits the generated object information to the external server 200 (S1300). The display apparatus 100 receives recommendation information generated by the external server 200 (S1400). Here, the recommendation information may include information about recommended content and applications or setting information of the display apparatus 100.

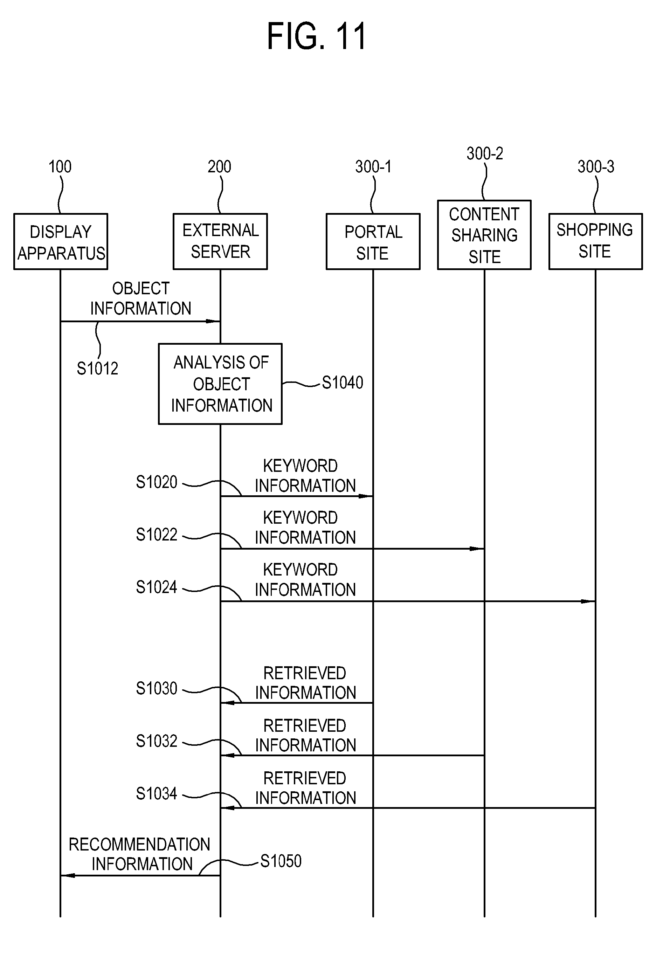

FIG. 11 is a timing view for explaining a process of providing recommendation information according to an exemplary embodiment.

Referring to FIG. 11, the display apparatus 100 transmits the object information extracted from a predetermined input image to the external server 200 (S1012). The external server 200 may analyze the objection information received from the display apparatus to generate keyword information corresponding to the object information through, for example, a known image search algorithm (S1040). When the keyword information is generated, the external server 200 sends a request for information retrieval according to the generated keyword information to Internet sites such as, for example, a portal site 300-1, a content-sharing site 300-2, or a shopping site 300-3 (S1020, S1022, S1024).

Upon receiving the request for information retrieval, the portal site 300-1, the content-sharing site 300-2, and the shopping site 300-3 retrieve and transmit information corresponding to the keyword information (S1030, S1032, S1034). In FIG. 11, it is illustrated that information retrieval request is transmitted to the portal site 300-1, the content-sharing site 300-2, and the shopping site 300-3, however, exemplary embodiments are not limited thereto. For example, the information retrieval request may be transmitted to only a specific Internet site preset by the user.

The external server 200 may generate recommendation information based on the retrieved information and transmit the recommendation information to the display apparatus (S1050).

A method of providing recommendation information using a display apparatus according to exemplary embodiments may be embodied in at least one execution program stored in various types of record media.

For example, a code for performing a method of providing recommendation information using a display apparatus according to exemplary embodiments may be stored in various types of record medium readable by a computer such as a random access memory (RAM), a flash memory, a read only memory (ROM), erasable programmable ROM (EPROM), an electronically erasable and programmable ROM (EEPROM), a register, a hard disk, a removable disk, a memory card, a universal serial bus (USB) memory, and a compact disc ROM (CD-ROM).

As described above, according to exemplary embodiments, a surrounding environment and objects around a display apparatus may be recognized to detect user's preference and recommendation information may be provided according to the recognition, without requiring a user to input user information in advance.

Also, according to exemplary embodiments, objects extracted from a predetermined input image may be used to detect user's preference and recommendation information may be provided according to the detected user's preference.

Although a few exemplary embodiments have been shown and described, it will be appreciated by those skilled in the art that changes may be made in these exemplary embodiments without departing from the principles the invention, which is defined in the appended claims and their equivalents.[99] Attention is directed to all papers and documents which are filed concurrently with or previous to this specification in connection with this application and which are open to public inspection with this specification, and the contents of all such papers and documents are incorporated herein by reference.[100] All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (100) comprising:
a display unit (110);
a processing unit (130) configured to receive an input image, extract an object included in the input image, and generate object information based on the extracted object;
a communication unit (140) configured to communicate with an external server (200) via a network; and
a controller (150) configured to control the communication unit to transmit the object information to the server and receive recommendation information generated by an analysis of the object information from the server.

2. The display apparatus (100) of claim 1, wherein the recommendation information comprises information about a recommended content and a recommended application.

3. The display apparatus (100) of claim 2, wherein the controller (150) displays, on the display unit (110), a list of the recommended content and the recommended application included in the recommendation information.

4. The display apparatus (100) of claim 2, wherein the controller (150) automatically installs the recommended application included in the recommendation information.

5. The display apparatus (100) of claim 1, wherein the recommendation information comprises setting information of the display apparatus, and the controller (150) changes a setting of the display apparatus based on the setting information.

6. The display apparatus (100) of claim 5, wherein the setting information of the display apparatus comprises information about at least one from among a wallpaper, an icon, and a display configuration.

7. The display apparatus (100) of claim 1 in combination with a server, wherein the object information comprises keyword information corresponding to the object information and the server generates the recommendation information by information retrieval based on the keyword information through an Internet network.

8. The display apparatus (100) of claim 1 in combination with a server, wherein the server (200) analyzes a color of the object information to generate the recommendation information.

9. The display apparatus (100) of claim 1 in combination with a server, wherein the server (200) generates the recommendation information based on at least one from among the object information and user information input in advance.

10. The display apparatus (100) of claim 1, further comprising an image capturing unit (120) configured to capture an image, wherein the captured image is provided to the processing unit (130) as the input image, and
wherein the image capturing unit captures an image of a surrounding environment of the display apparatus.

11. A method of providing recommendation information using a display apparatus (100), the method comprising:
receiving an input image;
extracting an object included in the input image and generating object information based on the extracted object;
transmitting the object information to an external server (200) though a network; and
receiving recommendation information generated by an analysis of the object information from the server.

12. The method of claim 11, wherein the recommendation information comprises information about a recommended content and a recommended application.

13. The method of claim 12, further comprising displaying a list of the recommended content and the recommended application included in the recommendation information.

14. The method of claim 12, further comprising automatically installing the recommended application included in the recommendation information.

15. The method of claim 11, further comprising capturing an image, wherein the captured image is provided as the input image,
wherein the captured image is an image of a surrounding environment of the display apparatus.
